# EUROPEAN PATENT APPLICATION

(11) **EP 3 943 926 A1**
(43) Date of publication of application: **26.01.2022**
(21) Application number: 19919855.7
(22) Date of filing: 11.12.2019
(51) Int. Cl.: G01N 27/62

(54) **SAMPLE SUPPORT, IONIZATION METHOD, AND MASS SPECTROMETRY METHOD**

(30) Priority: 19.03.2019 JP 2019051424
(71) Applicant: Hamamatsu Photonics K.K., Hamamatsu-shi, Shizuoka 435-8558 (JP)
(72) Inventor: KOTANI Masahiro, Hamamatsu-shi, Shizuoka 435-8558 (JP); OHMURA Takayuki, Hamamatsu-shi, Shizuoka 435-8558 (JP); TASHIRO Akira, Hamamatsu-shi, Shizuoka 435-8558 (JP)
(74) Representative: Grünecker Patent- und Rechtsanwälte PartG mbB
(86) International application number: PCT/JP2019/048569
(87) International publication number: WO 2020/188917

(57) **Abstract**

The sample support includes a substrate having a plurality of through holes opened in a first surface and a second surface, a frame surrounding a measurement region of the substrate and supporting the substrate when viewed in a thickness direction of the substrate, and a protective layer disposed to face the first surface and having a facing portion facing the measurement region. A through hole penetrating in the thickness direction is formed in the facing portion. The through hole of the facing portion includes a narrow portion having a width smaller than an outer diameter of a tip of a pipette tip for dropping a sample solution into the measurement region.

## Description

### Technical Field

The present disclosure relates to a sample support, an ionization method, and a mass spectrometry method.

### Background Art

Conventionally, a laser desorption ionization method is known as a method of ionizing a sample such as a biological sample for mass spectrometry or the like. As a sample support used in a laser desorption ionization method, Patent Document 1 discloses a sample support including a substrate in which a plurality of through holes are formed and a conductive layer provided on at least one surface of the substrate.

### Citation List

### Patent Document

[Patent Document 1] Japanese Patent No. 6093492

### Summary of Invention

### Technical Problem

As a measurement method using the sample support, there is a method in which a sample solution of a measurement target (ionization target) is dropped into a surface of the sample support on which a conductive layer is formed, and after the sample solution is dried, the surface is irradiated with an energy beam such as laser light. In this method, the dropping of the sample solution may be performed using a pipette tip. Here, in order to dry the sample solution in as short a time as possible, the dropping amount of the sample solution may be set to a very small amount (for example, 50 nL to 100 nL). In this case, it is necessary to bring the tip of the pipette tip as close to the measurement region as possible in order to reliably drop the sample solution into the measurement region (region for arranging the sample) of the sample support.

However, when the pipette tip is manually moved closer to the measurement region, the tip of the pipette tip may unintentionally contact the measurement region. Even when the above operation is mechanically performed, it is not easy to position the tip of the pipette tip with high accuracy. In particular, when a sample solution is simultaneously dropped into a plurality of measurement regions provided on a sample support by simultaneously operating a plurality of pipette tips, the height positions of the tips of the plurality of pipette tips are required to be aligned with high accuracy, but such control is not easy. As described above, even if the operation of dropping the sample solution using the pipette tip is performed manually or mechanically, the tip of the pipette tip may come into contact with the measurement region. Further, since the substrate constituting the sample support is a membrane-shaped thin film, if the tip of the pipette tip and the measurement region come into contact with each other, the substrate may be damaged in the measurement region.

Therefore, an object of the present disclosure is to provide a sample support, an ionization method, and a mass spectrometry method capable of preventing breakage of a substrate caused by contact between the substrate and a pipette tip.

### Solution to Problem

A sample support according to an aspect of the present disclosure includes: a substrate having a first surface and a second surface opposite to the first surface, the substrate having a plurality of first through holes opened in the first surface and the second surface; a frame formed to surround a measurement region of the substrate for ionizing a component of the sample when viewed from a thickness direction of the substrate and configured to support the substrate; and a protective layer disposed to face the first surface and having a facing portion facing the measurement region. A second through hole penetrating in the thickness direction is formed in the facing portion. The second through hole includes a narrow portion having a width smaller than an outer diameter of a tip of a pipette tip for dropping a sample solution including the sample into the measurement region.

In the sample support, a protective layer having a facing portion facing a measurement region for ionizing a component of a sample of a substrate in which a plurality of first through holes are formed is disposed to face a first surface of the substrate. In addition, a second through hole including a narrow portion having a width smaller than an outer diameter of a tip of a pipette tip for dropping the sample solution into the measurement region is formed in the facing portion. Therefore, even if the tip of the pipette tip is moved closer to the first surface in order to drop the sample solution into the first surface of the measurement region, the tip of the pipette tip does not pass through the second through hole. That is, the narrow portion of the second through hole reliably prevents the tip of the pipette tip from penetrating the second through hole and contacting the first surface of the measurement region. Therefore, according to the sample support, it is possible to prevent the substrate from being damaged due to the contact between the substrate and the pipette tip.

The second through hole may be formed in a cylindrical shape having a width smaller than the outer diameter. Accordingly, the contact between the tip of the pipette tip and the first surface of the measurement region may be reliably prevented by the second through hole having a relatively simple shape.

The second through hole may be formed in a tapered shape in which an inner diameter thereof decreases toward the first surface along the thickness direction, and when viewed from the thickness direction, an opening of the second through hole opposite to the first surface side may have a size including the tip of the pipette tip. Thus, the tip of the second tip can be easily introduced into the second through hole. That is, even if the position of the tip of the pipette tip is slightly shifted in the direction orthogonal to the thickness direction, the tip of the pipette tip can be guided into the second through hole. Further, since the tip of the pipette tip can be brought closer to the first surface of the measurement region, the sample solution can be suitably dropped into the measurement region.

The second through hole may include a cylindrical portion including the narrow portion, and a bowl-shaped portion connected to an end portion of the cylindrical portion opposite to the first surface side and having an inner diameter increasing with distance from the first surface along the thickness direction. Thus, the tip of the second tip can be easily introduced into the pipette through hole. That is, even if the position of the tip of the pipette tip is slightly shifted in the direction orthogonal to the thickness direction, the tip of the pipette tip can be introduced into the second through hole. Further, since the tip of the pipette tip can be brought closer to the first surface of the measurement region, the sample solution can be suitably dropped into the measurement region. Further, there is an advantage that such a second through hole can be formed by relatively easy processing such as etching.

The facing portion may be adhered directly or indirectly to the first surface so as to be releasable from the first surface. In this case, when the sample solution is dropped, the facing portion is adhered to the first surface, thereby preventing the substrate from being damaged due to the contact between the substrate and the pipette tip as described above. Further, when the first surface is irradiated with the energy beam after the dropped sample solution is dried to ionize the component of the sample, the facing portion can be removed from the substrate so that the facing portion does not interfere with the irradiation of the energy beam. Therefore, according to the above aspect, both the dropping of the sample solution into the sample support and the subsequent ionization step can be suitably performed.

The facing portion may have an adhesive portion that is directly or indirectly adhered to the first surface at a peripheral portion of an opening of the second through hole on the first surface side, and a spaced portion that is located outside the adhesive portion when viewed from the thickness direction and is spaced apart from the first surface. In order to appropriately drop the sample solution into the first surface, the adhesive portion and the first surface need to be adhered to each other. In addition, if the facing portion does not have the spaced portion, when the adhesive portion and the first surface are completely adhered to each other, the facing portion pushes out the entire first surface, and thus the substrate may be damaged. On the other hand, since the facing portion has the spaced portion, only the adhesive portion slightly pushes out the first surface. As a result, the protective layer and the substrate can be adhered to each other while suppressing breakage of the substrate due to bending of the first surface.

The frame may be bonded to the first surface of the substrate, and the protective layer may be provided to cover the frame and the measurement region. Accordingly, when the frame is bonded to the first surface of the substrate, the protective layer can be appropriately provided.

The frame is bonded to the second surface of the substrate and may be formed of a magnetic material. For example, when the sample support is fixed in order to drop the sample solution into the sample support, by using the mounting portion having magnetism, the frame can be appropriately fixed to the mounting portion by the magnetic force acting between the frame and the mounting portion.

The protective layer may be formed of a magnetic material, and the protective layer may be fixed to the first surface of the substrate by a magnetic force between the protective layer and the frame. Accordingly, an adhesive or the like for fixing the protective layer to the substrate can be eliminated. Therefore, when the protective layer is removed from the first surface of the substrate, the first surface of the substrate can be prevented from being pulled to damage the substrate.

The sample support may further include a conductive layer provided on the first surface so as not to block the first through hole. Thus, even when an insulating substrate is used, a voltage can be applied to the first surface side of the substrate via the conductive layer. Thus, after the sample solution is dropped into the first surface and the sample solution is dried, the first surface is irradiated with the energy beam while applying a voltage to the conductive layer, whereby the components of the sample can be favorably ionized.

The width of the first through hole may be 1 nm to 700 nm, and the width of the narrow portion of the second through hole may be 500 µm or less. Accordingly, the component of the sample contained in the sample solution dropped into the first surface of the substrate can be appropriately retained on the first surface side of the substrate. Further, by setting the width of the narrow portion to 500 µm or less, the width of the narrow portion can be reliably made smaller than the outer diameter of the tip of a general pipette tip.

A plurality of measurement regions may be formed in the substrate, and the protective layer may have a plurality of facing portions corresponding to the plurality of measurement regions. Accordingly, for example, by simultaneously operating a plurality of pipette tips, it is possible to simultaneously drop the sample solution to a plurality of measurement regions. As a result, the efficiency of measurement work can be improved.

A hydrophilic coating layer may be provided on the inner surface of the second through hole. Accordingly, the sample solution dropped from the tip of the pipette tip is easily transferred to the inner surface of the second through hole. As a result, the movement of the sample solution to the first surface side in the second through hole is promoted, and the sample solution can be moved to the first surface more smoothly.

According to an aspect of the present disclosure, there is provided an ionization method including: a first step of preparing the sample support; a second step of placing the sample support on a mounting surface of a mounting portion such that the second surface faces the mounting surface; a third step of bringing a tip of the pipette tip close to the second through hole from a side opposite to the first surface side of the protective layer and then dropping the sample solution from the tip of the pipette tip into the measurement region through the second through hole; a fourth step of removing the protective layer from the sample support after the sample solution is dropped; and a fifth step of ionizing a component of the sample by irradiating the first surface of the measurement region with an energy beam after the sample solution dropped on the substrate is dried.

In the above ionization method, in the third step in which the sample solution is dropped, even if the tip of the pipette tip is moved closer to the first surface in order to drop the sample solution into the first surface of the measurement region, the tip of the pipette tip does not pass through the second through hole. That is, the narrow portion of the second through hole reliably prevents the tip of the pipette tip from penetrating the second through hole and contacting the first surface of the measurement region. Accordingly, it is possible to prevent the substrate from being damaged due to the contact between the substrate and the pipette tip. In addition, by removing the protective layer before the fifth step in which the component of the sample is ionized, the first surface of the measurement region can be appropriately irradiated with the energy beam in the fifth step. Therefore, according to the ionization method, the substrate can be prevented from being damaged due to the contact between the substrate and the pipette tip, and the components of the sample can be appropriately ionized.

The ionization method may include a step of performing a surface treatment for improving hydrophilicity on the inner surface of the second through hole before the third step. Accordingly, in the third process, the sample solution dropped from the tip of the pipette tip is easily transferred to the inner surface of the second through hole. As a result, the movement of the sample solution to the first surface side in the second through hole is promoted, and the sample solution can be moved to the first surface more smoothly.

Amass spectrometry method according to an aspect of the present disclosure includes each step of the above ionization method, and a sixth step of detecting a component ionized in the fifth step.

According to the mass spectrometry method, by including the respective steps of the above-described ionization method, the same effects as those of the above-described ionization method are exhibited.

### Advantageous Effects of Invention

According to the present disclosure, it is possible to provide a sample support, an ionization method, and a mass spectrometry method capable of preventing breakage of a substrate caused by contact between the substrate and a pipette tip.

### Brief Description of Drawings

FIG. 1 is a plan view of the sample support of the first embodiment.
FIG. 2 is a cross-sectional view of the sample support taken along line II-II shown in FIG. 1.
FIG. 3 is a cross-sectional view of the sample support (excluding the protective layer) taken along line III-III shown in FIG. 1.
FIG. 4 is a diagram showing an enlarged image of the substrate of the sample support shown in FIG. 1.
FIG. 5 is a cross-sectional view of a portion including a facing portion of a protective layer in the sample support of the first embodiment.
FIG. 6 is a diagram showing a process of a mass spectrometry method using the sample support of the first embodiment.
FIG. 7 is a diagram showing a process of a mass spectrometry method using the sample support of the first embodiment.
FIG. 8 is a diagram showing a process of a mass spectrometry method using the sample support of the first embodiment.
FIG. 9 is a cross-sectional view showing a first modification of the protective layer.
FIG. 10 is a cross-sectional view showing a second modification of the protective layer.
FIG. 11 is a plan view of the sample support of the second embodiment.
FIG. 12 is a cross-sectional view of the sample support taken along line XII-XII shown in FIG. 11.
FIG. 13 is a cross-sectional view of the sample support taken along line XIII-XIII shown in FIG. 11.
FIG. 14 is a diagram showing a process of a mass spectrometry method using the sample support of the second embodiment.
FIG. 15 is a diagram showing a process of a mass spectrometry method using the sample support of the second embodiment.
FIG. 16 is a diagram showing a process of a mass spectrometry method using the sample support of the second embodiment.
FIG. 17 is a cross-sectional view showing a first modification of the protective layer.
FIG. 18 is a cross-sectional view showing a second modification of the protective layer.

### Description of Embodiments

Hereinafter, embodiments of the present disclosure will be described with reference to the drawings. In the drawings, the same or corresponding portions are denoted by the same reference numerals, and redundant description will be omitted. In the drawings, some portions are exaggerated for easy understanding of characteristic portions according to the embodiments, and the dimensions may be different from actual dimensions. In the following description, terms such as "upper" and "lower" are used for convenience based on the state shown in the drawings.

### [First Embodiment]

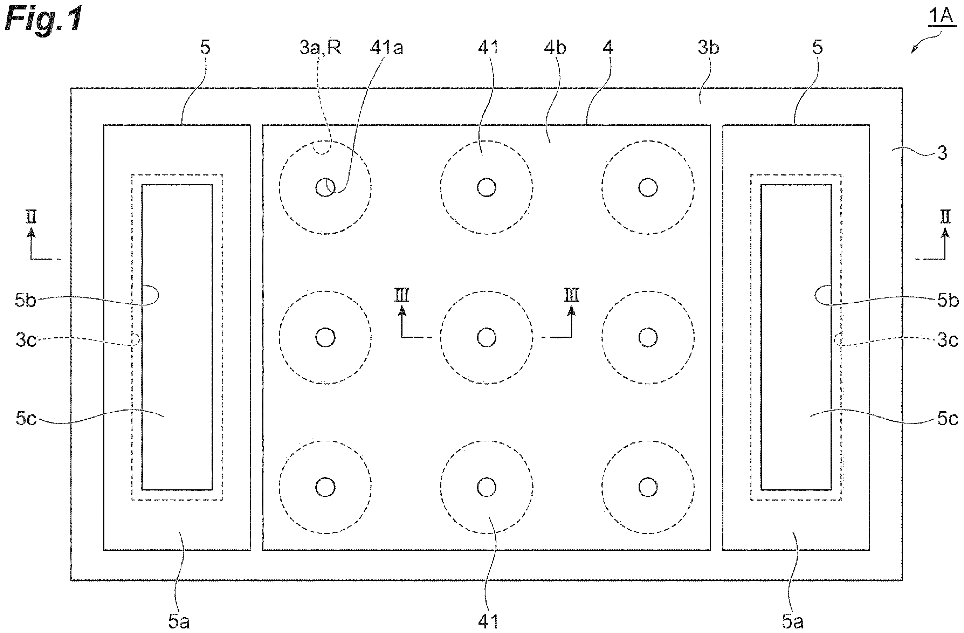

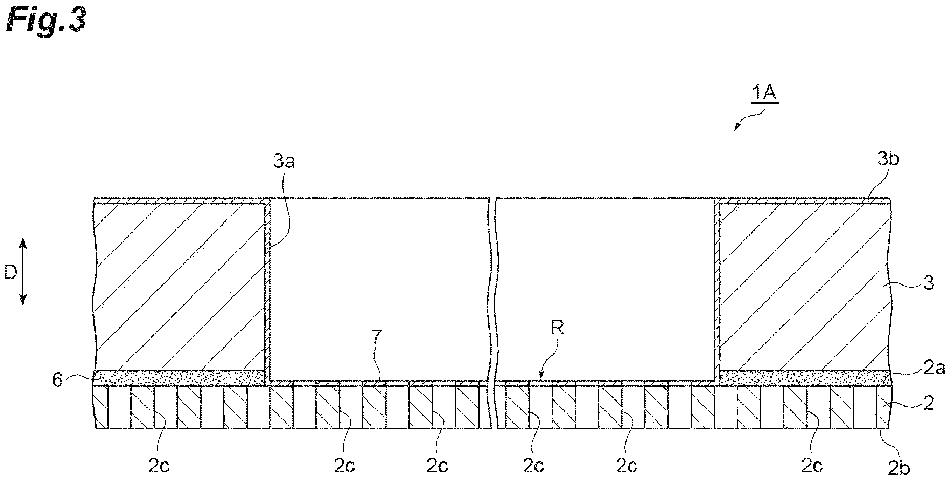

A sample support 1A according to the first embodiment will be described with reference to FIGS. 1 to 5. The sample support 1A is used for sample ionization. As shown in FIGS 1 to 3, the sample support 1A includes a substrate 2, a frame 3, a protective layer 4, a tape 5, and a conductive layer 7. The conductive layer 7 included in the sample support 1A is illustrated only in FIG. 3, and the conductive layer 7 included in the sample support 1A is not illustrated in the other drawings. In FIG. 3, the protective layer 4 is not shown.

The substrate 2 has a first surface 2a and a second surface 2b opposite to the first surface 2a. As shown in FIG. 3, a plurality of through holes 2c (first through holes) are formed uniformly (in a uniform distribution) in the substrate 2. Each through hole 2c extends along the thickness direction D of the substrate 2 (the direction in which the first surface 2a and the second surface 2b face each other), and is open to the first surface 2a and the second surface 2b.

The substrate 2 is formed of, for example, an insulating material in a rectangular plate shape. The length of one side of the substrate 2 when viewed from the thickness direction D is, for example, about several cm. The thickness of the substrate 2 is, for example, about 1 µm to 50 µm. In the present embodiment, as an example, the thickness of the substrate 2 is about 5 µm. The shape of the through hole 2c when viewed from the thickness direction D is, for example, substantially circular. The width of the through hole 2c is, for example, about 1 nm to 700 nm.

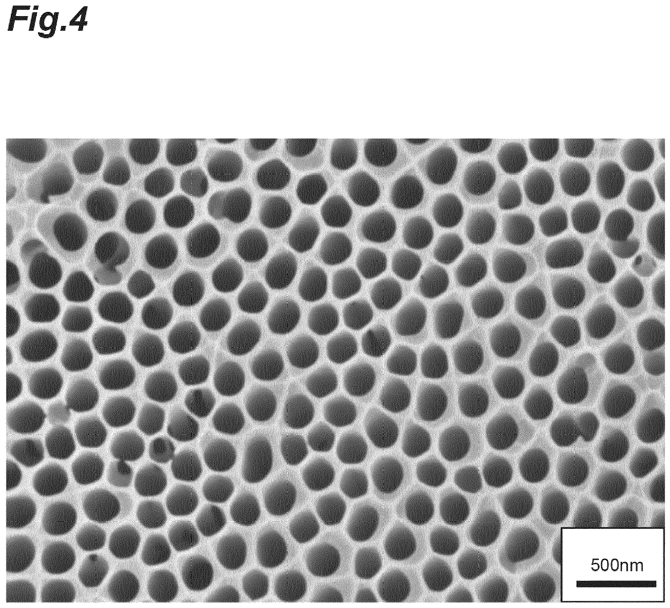

The width of the through hole 2c is a value obtained as follows. First, images of the first surface 2a and the second surface 2b of the substrate 2 are acquired. FIG. 4 shows an example of an SEM image of a part of the first surface 2a of the substrate 2. In the SEM image, black portions are through holes 2c, and white portions are partition wall portions between the through holes 2c. Subsequently, for example, a binarization process is performed on the acquired image of the first surface 2a to extract a plurality of pixel groups corresponding to a plurality of first openings (openings of the through holes 2c on the first surface 2a side) in the measurement region R, and a diameter of circle having an average area of the first openings are acquired based on size per a pixel. Similarly, by performing, for example, binarization processing on the acquired image of the second surface 2b to extract a plurality of pixel groups corresponding to a plurality of second openings (openings of the through holes 2c on the second surface 2b side) in the measurement region R, and a diameter of circle having an average area of the second openings are acquired based on size per a pixel. Then, an average value of the diameter of the circle acquired for the first surface 2a and the diameter of the circle acquired for the second surface 2b is acquired as the width of the through hole 2c.

As shown in FIG. 4, a plurality of through holes 2c having a substantially constant width are uniformly formed in the substrate 2. The substrate 2 shown in FIG. 4 is an alumina porous film formed by anodizing Al (aluminum). For example, by anodizing the A1 substrate, surface portion of the Al substrate is oxidized, and a plurality of pores (portions to become through holes 2c) are formed in the surface portion of the Al substrate. Subsequently, the oxidized surface portion (anodized film) is peeled off from the Al substrate, and the peeled anodized film is subjected to a pore-widening treatment for widening the pores, thereby obtaining the above-described substrate 2. The substrate 2 may be formed by anodizing a valve metal other than Al, such as Ta (tantalum), Nb (niobium), Ti (titanium), Hf (hafnium), Zr (zirconium), Zn (zinc), W (tungsten), Bi (bismuth), or Sb (antimony), or may be formed by anodizing Si (silicon).

The frame 3 is provided on the first surface 2a of the substrate 2 and supports the substrate 2 on the first surface 2a side. As shown in FIG. 3, the frame 3 is bonded to the first surface 2a of the substrate 2 by adhesive layer 6. The material of the adhesive layer 6 is preferably, for example, an adhesive material (for example, low-melting-point glass, a vacuum adhesive, or the like) that releases less gas. In the present embodiment, when viewed from the thickness direction D, the frame 3 is formed in a rectangular plate shape larger than the substrate 2. The frame 3 is formed with a plurality of opening parts 3a penetrating in a thickness direction of the frame 3 (i.e., a direction coinciding with the thickness direction D). As shown in FIG. 1, the plurality of opening parts 3a are arranged in a lattice pattern, for example. In the present embodiment, when viewed from the thickness direction D, nine opening parts 3a are arranged in 3 rows and 3 columns. A portion of the substrate 2 corresponding to the opening part 3a (that is, a portion overlapping the opening part 3a when viewed from the thickness direction D) functions as a measurement region R for performing sample ionization. That is, each measurement region R is defined by each opening part 3a provided in the frame 3. In other words, the frame 3 is formed so as to surround the measurement region R of the substrate 2 when viewed from the thickness direction D by having such an opening part 3a.

Each measurement region R is a region including a plurality of through holes 2c. The aperture ratio of the through holes 2c in the measurement region R (the ratio of the through holes 2c to the measurement region R when viewed from the thickness direction D) is practically 10 % to 80 %, and particularly preferably 60 % to 80 %. The through holes 2c may have different sizes, or the through holes 2c may be partially connected to each other.

The frame 3 is formed of, for example, a magnetic metal material (for example, a stainless steel material (SUS 400 series) or the like) in a rectangular plate shape. The length of one side of the frame 3 when viewed from the thickness direction D is, for example, about several cm to 200 cm, and the thickness of the frame 3 is, for example, 3 mm or less. In the present embodiment, as an example, the thickness of the frame 3 is 0.2 mm. The shape of the opening part 3a when viewed from the thickness direction D is, for example, circular, and the diameter of the opening part 3a in this case is, for example, about several mm to several 10 of mm. In the present embodiment, as an example, the diameter of the opening part 3a is 3 mm. The distance (pitch) between the centers of adjacent opening parts 3a is, for example, about several millimeters to several 10 of millimeters. According to the frame 3, handling of the sample support 1A can be facilitated, and deformation of the substrate 2 due to a temperature change or the like is suppressed.

The protective layer 4 is disposed to face the first surface 2a of the substrate 2. The protective layer 4 is formed of, for example, metal, glass, or the like in a rectangular plate shape. The protective layer 4 has an inner surface 4a facing the first surface 2a of the substrate 2 and an outer surface 4b opposite to the inner surface 4a. The protective layer 4 has at least a facing portion 41 facing the measurement region R in the thickness direction D. In the present embodiment, when viewed from the thickness direction D, the protective layer 4 is integrally formed so as to include a plurality of (here, nine) measurement regions R (that is, regions in which the opening part 3a is formed). However, the protective layer 4 may be separated into a plurality of portions (for example, portions provided corresponding to the respective measurement regions R).

In the present embodiment, since the frame 3 is provided on the first surface 2a of the substrate 2, the protective layer 4 is provided on the surface 3b of the frame 3 opposite to the substrate 2. That is, the protective layer 4 is provided so as to cover the frame 3 and the measurement region R. A portion of the inner surface 4a of the protective layer 4 facing the surface 3b of the frame 3 may be adhered to the surface 3b of the frame 3 through the conductive layer 7 with an adhesive force that allows the portion to be separated from the surface 3b of the frame 2.

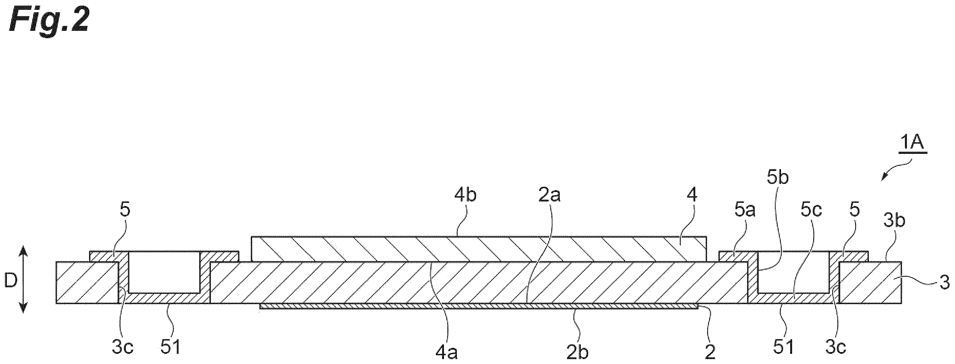

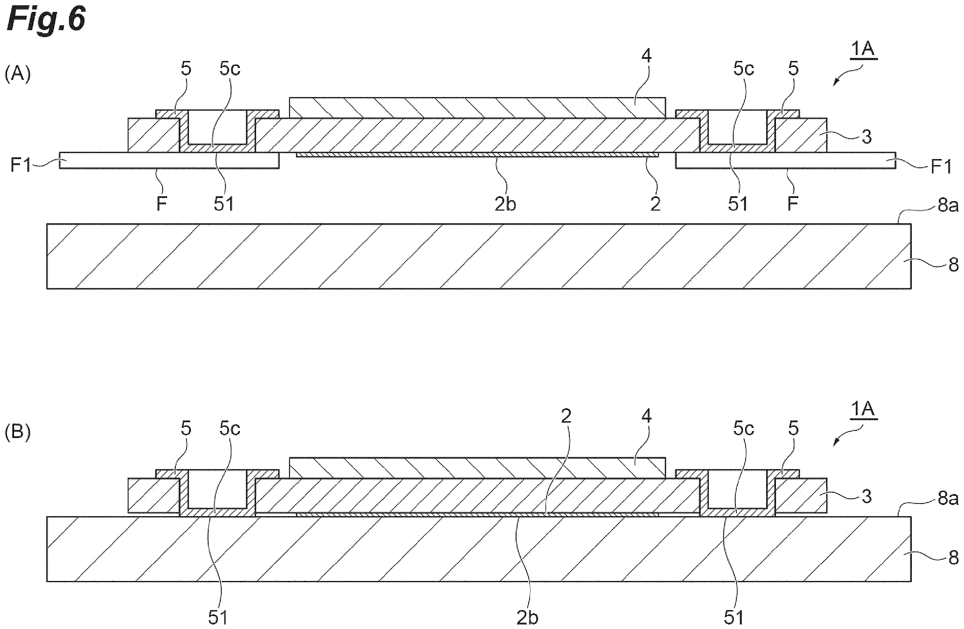

The tape 5 is a fixing member for fixing the sample support 1A to a mounting surface 8a (see FIG. 6) of the glass slide 8 (mounting portion) when measurement using the sample support 1A is performed. The tape 5 is formed of a conductive material. The tape 5 is, for example, a carbon tape. In the present embodiment, an opening part 3c penetrating in the thickness direction of the frame 3 is formed in a portion of the frame 3 not overlapping the substrate 2 and the protective layer 4 when viewed from the thickness direction D. Specifically, as shown in FIGS. 1 and 2, a rectangular opening part 3c is formed at each of both edges of the frame 3 facing each other across the substrate 2 when viewed from the thickness direction D. The tape 5 is provided in each opening part 3c. In detail, the adhesive surface 51 of the tape 5 is adhered to the peripheral portion of the opening part 3c of the surface 3b of the frame 3, and the inner surface of the opening part 3a from the surface 3b side of the frame 3. That is, the tape 5 has a portion 5a along the peripheral portion, a portion 5b along the inner surface of the opening part 3a, and a portion 5c along the surface of the frame 3 on the substrate 2 side in the opening part 3a. Further, in the portion 5c, the adhesive surface 51 faces the side where the substrate 2 is located with respect to the frame 3. That is, the sample support 1A can be fixed to the mounting surface 8a by pressing the adhesive surface 51 in the portion 5c against the mounting surface 8a of the glass slide 8. In the present embodiment, as shown in FIG. 6, the sample support 1A has a film cover F that covers the adhesive surface 51 of the portion 5c in a state before measurement (for example, during distribution). The film cover F overlaps the portion 5c when viewed from the thickness direction D. Further, the film cover F has a protruding portion F1 protruding outward from both edges of the frame 3. Since the protruding portion F1 of the film cover F is held in a state before the measurement is performed, the sample support 1A can be stored in the storage case or carried.

The conductive layer 7 is provided on the first surface 2a of the substrate 2. As shown in FIG. 3, the conductive layer 7 is continuously (integrally) formed on a region of the first surface 2a of the substrate 2 corresponding to the opening part 3a of the frame 3 (that is, a region corresponding to the measurement region R), an inner surface of the opening part 3a, and the surface 3b of the frame 3. In the measurement region R, conductive layer 7 covers a portion of first surface 2a of substrate 2 where the through holes 2c are not formed. That is, the conductive layer 7 is provided so as not to block each through hole 2c. Therefore, in the measurement region R, each through hole 2c is exposed to the opening part 3a.

The conductive layer 7 is formed of a conductive material. In the present embodiment, the conductive layer 7 is formed of Pt (platinum) or Au (gold). As described above, as the material of the conductive layer 7, a metal having low affinity (reactivity) with the sample and high conductivity is preferably used for the following reason.

For example, when the conductive layer 7 is formed of metals such as Cu having high affinity with a sample such as proteins, the sample is ionized in a state in which Cu atom is attached to sample molecules in a process of sample ionization described later, and there is a concern that a detection result is deviated in mass spectrometry described later by the amount of attachment of Cu atom. Therefore, as the material of the conductive layer 7, a metal having low affinity with the sample is preferably used.

On the other hand, the higher the conductivity of a metal is, the easier it is to apply a constant voltage easily and stably. Therefore, when the conductive layer 7 is formed of a highly conductive metal, a voltage can be uniformly applied to the first surface 2a of the substrate 2 in the measurement region R. In addition, a metal having higher conductivity tends to have higher thermal conductivity. Therefore, when the conductive layer 7 is formed of a metal having high conductivity, the energy of laser light (energy beam) applied to the substrate 2 can be efficiently transmitted to the sample through the conductive layer 7. Therefore, a metal having high conductivity is preferably used as the material of the conductive layer 7.

From the above viewpoint, as the material of the conductive layer 7, for example, Pt, Au, or the like is preferably used. The conductive layer 7 is formed to be about 1 nm to 350 nm thick by, for example, plating, atom layer deposition (ALD: Atomic Layer Deposition), vapor deposition, sputtering, or the like. As a material of the conductive layer 7, for example, Cr (chromium), Ni (nickel), Ti (titanium), or the like may be used.

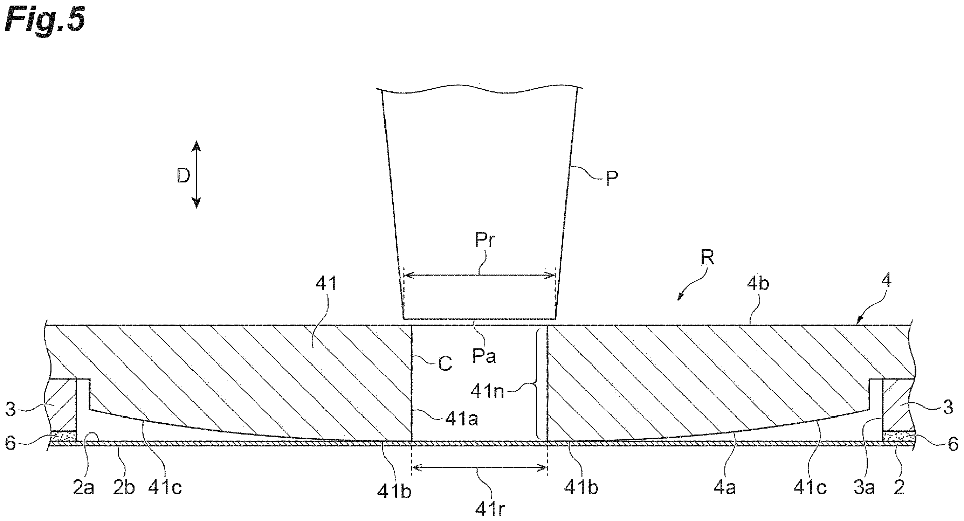

Next, a detailed configuration of the facing portion 41 of the protective layer 4 will be described with reference to FIG. 5. As shown in FIG. 5, a through hole 41a (second through hole) penetrating in the thickness direction D is formed in each facing portion 41 of the protective layer 4. The length of the through hole 41a in the thickness direction D (that is, the thickness of the facing portion 41 in the portion where the through hole 41a is formed) is, for example, 0.1 mm to 5.0 mm. The through hole 41a includes a narrow portion 41n having a width 41r (minimum width) smaller than the outer diameter Pr of the tip Pa of the pipette tip P. The pipette tip P is a device for dropping a sample solution containing a sample into the measurement region R. For example, the pipette tip P is a pipette tip for high throughput screening (HTS). That is, the pipette tip P is a pipette tip used by an apparatus that performs HTS. In the present embodiment, the through hole 41a is formed in a tubular shape (cylindrical shape in the present embodiment) having a width 41r smaller than the outer diameter Pr. That is, in the present embodiment, the narrow portion 41n is formed by the entire through hole 41a in the thickness direction D. The width 41r of the narrow portion 41n is 500 µm or less. In order to ensure that the sample solution reaches the first surface 2a, the width 41r of the narrow portion 41n is preferably 50 µm or more.

A hydrophilic coating layer C is provided on the inner surface of the through hole 41a. The coating layer C is formed of a material having higher hydrophilicity than the material of the inner surface of the through hole 41a (that is, the material of the protective layer 4). The coating layer C is, for example, a layer formed by film formation of titanium oxide (TiO2) or zinc oxide (ZnO). The coating layer C may be formed by, for example, atom layer deposition method. The thickness of the coating layer C is, for example, 1 nm to 50 nm.

The facing portion 41 is indirectly bonded to the first surface 2a of the substrate 2 via a conductive layer 7 (see FIG. 3) so as to be releasable from the first surface 2a. That is, the facing portion 41 is adhered to the conductive layer 7 on the first surface 2a with an adhesive force of a degree that allows peeling. The facing portion 41 has an adhesive portion 41b and a spaced portion 41c on the inner surface 4a. In the present embodiment, the combined portion of the adhesive portion 41b and the spaced portion 41c is formed in a curved surface shape that is convex toward the first surface 2a side.

The adhesive portion 41b is a portion that is indirectly adhered to the first surface 2a via the conductive layer 7 (see FIG. 3) at the peripheral portion of the opening of the through hole 41a on the first surface 2a side. The adhesive portion 41b is adhered to the conductive layer 7 provided on the first surface 2a by, for example, a removable double-sided tape.

The spaced portion 41c is a portion located outside the adhesive portion 41b when viewed from the thickness direction D. Spaced portion 41c is spaced from first surface 2a. Specifically, spaced portion 41c is a portion that is not in direct or indirect contact with the first surface 2a. That is, spaced portion 41c is also spaced apart from the conductive layer 7 provided on the first surface 2a.

### [Mass spectrometry method using sample support 1A]

Next, a mass spectrometry method (including an ionization method) using the sample support 1A will be described with reference to FIGS. 6 to 8.

First, as shown in (A) of FIG. 6, the above-described sample support 1A is prepared (first step). The sample support 1A may be prepared by being manufactured by a person who performs the mass spectrometry method, or may be prepared by being acquired from a manufacturer, a seller, or the like of the sample support 1A.

Subsequently, as shown in (B) of FIG. 6, the sample support 1A is mounted on the mounting surface 8a so that the second surface 2b of the substrate 2 faces the mounting surface 8a of the glass slide 8 (second step). The glass slide 8 is a glass substrate on which a transparent conductive film such as an ITO (Indium Tin Oxide) film is formed, and the surface of the transparent conductive film is a mounting surface 8a. The mounting portion is not limited to the glass slide 8, and a member capable of ensuring conductivity (for example, a substrate made of a metal material such as stainless steel) can be used as the mounting portion. In this embodiment, the film cover F is removed from the sample support 1A, and the adhesive surface 51 of the portion 5c of the tape 5 is pressed against the mounting surface 8a, so that the sample support 1A is fixed to the glass slide 8.

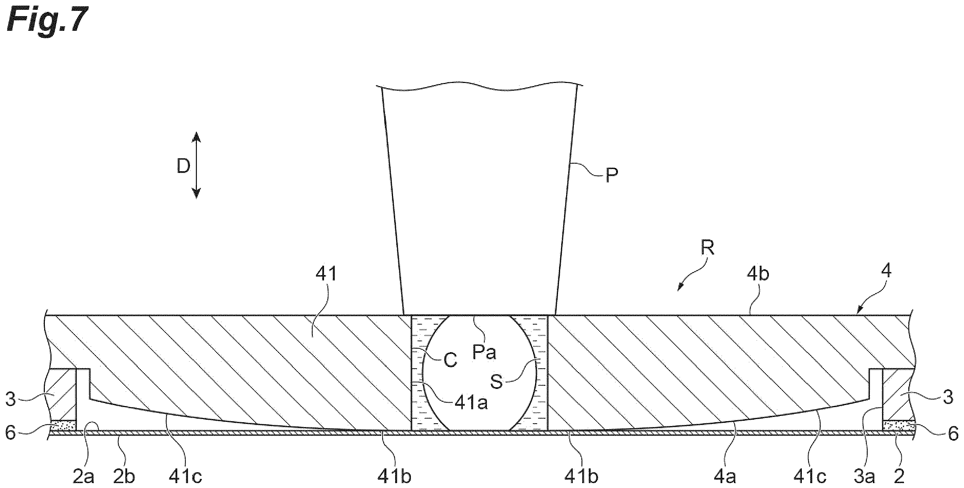

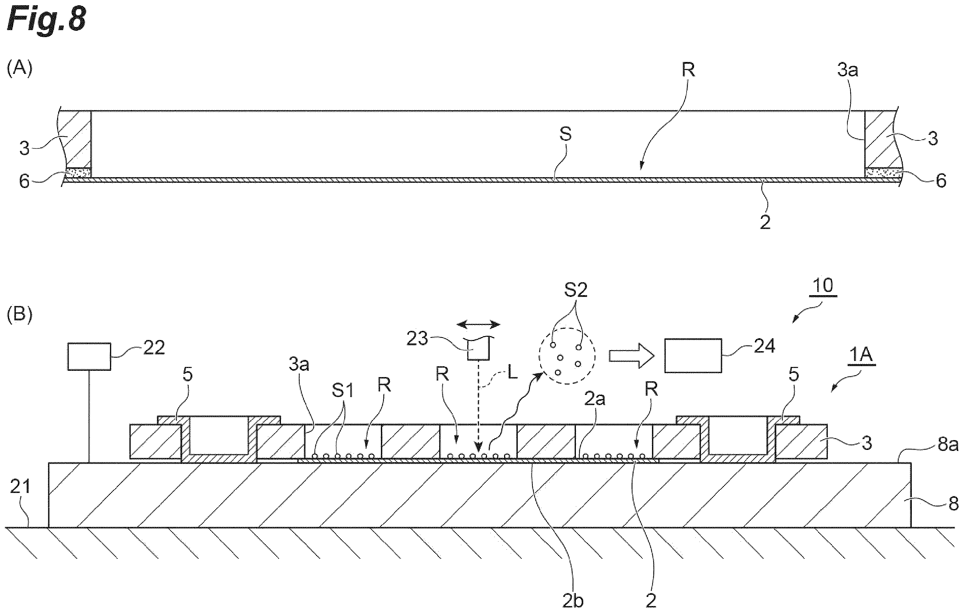

Subsequently, as shown in FIG. 7, in each measurement region R, the tip Pa of the pipette tip P is brought close to the through hole 41a from the outer surface 4b side (the side opposite to the first surface 2a side) of the protective layer 4. Specifically, the tip Pa of the pipette tip P is moved to a position where the tip Pa and the through hole 41a overlap when viewed from the thickness direction D and the tip Pa abuts on the outer surface 4b. Then, the sample solution S is dropped from the tip Pa of the pipette tip P into the measurement region R through the through hole 41a (third step). Thus, the sample solution S is introduced into the first surface 2a of the substrate 2 along the inner surface of the through hole 41a. Although a part of the sample solution S introduced into the first surface 2a penetrates into the through hole 2c and moves to the second surface 2b side, at least a part of the sample solution S remains on the first surface 2a side because the through hole 2c is a fine hole. When the sample solution S is dried, the component S1 of the sample remains on the first surface 2a side (see (B) of FIG. 8).

Subsequently, as shown in (A) of FIG. 8, after the sample solution S is dropped into each measurement region R, the protective layer 4 is removed from the sample support 1A (fourth step).

Subsequently, as shown in (B) of FIG. 8, the glass slide 8 and the sample support 1A are placed on the support unit 21 (for example, stage) of the mass spectrometer 20 in a state in which the sample support 1A in which the component S1 of the sample stays on the first surface 2a side is fixed to the glass slide 8. Subsequently, a voltage is applied to the frame 3 and the conductive layer 7 (see FIG. 3) of the sample support 1A through the mounting surface 8a of the glass slide 8 and the tape 5 by the voltage application unit 22 of the mass spectrometer 20. Subsequently, the first surface 2a of each measurement region R is irradiated with laser light L (energy beam) by the laser light irradiation unit 23 of the mass spectrometer 20 via the opening part 3a of the frame 3 (fifth step). That is, the laser light L is irradiated to a region (that is, the measurement region R) corresponding to the opening part 3a of the frame 3 in the first surface 2a of the substrate 2. In the present embodiment, the laser light irradiation unit 23 scans each measurement region R with the laser light L. The scanning of the laser light L for each measurement region R can be performed by operating at least one of the support unit 21 and the laser light irradiation unit 23.

In this manner, by irradiating the first surface 2a of the substrate 2 with the laser light L while applying a voltage to the conductive layer 7, the component S1 of the sample remaining in the through hole 2c (particularly, on the first surface 2a side) of the substrate 2 is ionized, and the sample ion S2 (ionized component SI) is discharged (fifth step). Specifically, the energy is transferred from the conductive layer 7 (see FIG. 3) that has absorbed the energy of the laser light L to the component S1 of the sample remaining in the through hole 2c, and the component S1 of the sample that has acquired the energy is vaporized and acquires an electric charge to become the sample ion S2. The first step to the fifth step described above correspond to an ionization method (laser desorption ionization method in the present embodiment) using the sample support 1A.

The released sample ion S2 moves while accelerating toward a ground electrode (not shown) provided between the sample support 1A and the ion detection unit 24 of the mass spectrometer 20. That is, the sample ion S2 moves toward the ground electrode while being accelerated by the potential difference generated between the conductive layer 7 to which the voltage is applied and the ground electrode. Then, the sample ion S2 is detected by the ion detection unit 24 (sixth step). In the present embodiment, the mass spectrometer 20 is a scanning mass spectrometer using time-of-flight mass spectrometry (TOF-MS). The first step to the sixth step described above correspond to the mass spectrometry method using the sample support 1A.

In the above ionization method, before the third step (i.e., before dropping the sample solution S), a step of performing a surface treatment for improving hydrophilicity on the inner surface of the through hole 41a (in the present embodiment, the surface of the coating layer C) may be further performed. For example, a surface treatment in which excimer irradiation or plasma irradiation is performed on the inner surface of the through hole 41a may be performed. Accordingly, in the third step, the sample solution S dropped from the tip Pa of the pipette tip P is easily transferred to the inner surface of the through hole 41a. As a result, the movement of the sample solution S to the first surface 2a side in the through hole 41a is promoted, and the sample solution S can be more smoothly moved to the first surface 2a.

### [Effects of First Embodiment]

As described above, in the sample support 1A, the protective layer 4 having the facing portion 41 facing the measurement region R is disposed so as to face the first surface 2a of the substrate 2. The facing portion 41 is formed with a through hole 41a including a narrow portion 41n having a width 41r smaller than the outer diameter Pr of the tip Pa of the pipette tip P. Therefore, even if an operation of bringing the tip Pa of the pipette tip P close to the first surface 2a is performed in order to drop the sample solution S into the first surface 2a of the measurement region R, the tip Pa of the pipette tip P does not pass through the through hole 41a. That is, the narrow portion 41n of the through hole 41a reliably prevents the tip Pa of the pipette tip P from passing through the through hole 41a and contacting the first surface 2a of the measurement region R. Therefore, according to the sample support 1A, it is possible to prevent the substrate 2 from being damaged due to the contact between the substrate 2 and the pipette tip P.

The through hole 41a is formed in a tubular shape (cylindrical shape in the present embodiment) having a width 41r smaller than the outer diameter Pr of the tip Pa of the pipette tip P. Accordingly, the through hole 41a having a relatively simple shape can reliably prevent the tip Pa of the pipette tip P from contacting the first surface 2a of the measurement region R. Further, in this case, the distance between the tip Pa of the pipette tip P and the first surface 2a (i.e., the distance in a state where the tip Pa and the first surface 2a are closest to each other) can be appropriately and easily defined by the length of the through hole 41a in the thickness direction D (i.e., the thickness of the protective layer 4 in the portion where the through hole 41a is provided).

The facing portion 41 is indirectly bonded to the first surface 2a via a conductive layer 7 (see FIG. 3) so as to be releasable from the first surface 2a. In this case, when the sample solution S is dropped, the facing portion 41 is adhered to the first surface 2a, thereby preventing the substrate 2 from being damaged due to the contact between the substrate 2 and the pipette tip P as described above. Further, when the component S1 of the sample is ionized by irradiating the first surface 2a with the laser light L after the dropped sample solution S is dried, the facing portion 41 can be removed from the substrate 2 so that the facing portion 41 does not interfere with the irradiation with the laser light L. Therefore, according to the above embodiment, both the dropping of the sample solution S into the sample support 1A and the subsequent ionization step can be suitably performed.

The facing portion 41 includes an adhesive portion 41b and a spaced portion 41c. In order to appropriately drop the sample solution S into the first surface 2a, the adhesive portion 41b and the first surface 2a need to be adhered to each other. In addition, if the facing portion 41 does not have the spaced portion 41c, when the adhesive portion 41b and the first surface 2a are completely adhered to each other, the facing portion 41 pushes out the entire first surface 2a, and thus the substrate 2 may be damaged. On the other hand, since the facing portion 41 has the spaced portion 41c, only the adhesive portion 41b slightly pushes out the first surface 2a. As a result, the protective layer 4 and the substrate 2 can be adhered to each other while suppressing breakage of the substrate 2 due to bending of the first surface 2a. As in the present embodiment, the spaced portion 41c preferably has a curved shape. Since the spaced portion 41c has a curved shape, when the adhesive portion 41b and the first surface 2a are bonded to each other, the pressure applied to the bonding surface of the first surface 2a is appropriately relaxed. However, the shape of the spaced portion 41c is not limited to the above.

The frame 3 is bonded to the first surface 2a of the substrate 2. The protective layer 4 is provided so as to cover the frame 3 and the measurement region R. Accordingly, when the frame 3 is bonded to the first surface 2a of the substrate 2, the protective layer 4 can be appropriately provided.

The sample support 1A includes a conductive layer 7 provided so as not to block the through hole 2c in the first surface 2a. As a result, even when the insulating substrate 2 is used as in the present embodiment, a voltage can be applied to the first surface 2a side of the substrate 2 via the conductive layer 7. Thus, after the sample solution S is dropped into the first surface 2a and the sample solution S is dried, the first surface 2a is irradiated with the laser light L while applying a voltage to the conductive layer 7, whereby the component S1 of the sample can be favorably ionized.

The width of the through hole 2c is 1 nm to 700 nm, and the width 41r of the narrow portion 41n of the through hole 41a is 500 µm or less. By setting the width of the through hole 2c to the above range, the component S1 of the sample contained in the sample solution S dropped into the first surface 2a of the substrate 2 can be appropriately retained on the first surface 2a side of the substrate 2. Further, by setting the width 41r of the narrow portion 41n to 500 µm or less, the width 41r of the narrow portion 41n can be reliably made smaller than the outer diameter of the tip of a general pipette tip.

A plurality of (here, nine) measurement regions R are formed in the substrate 2, and the protective layer 4 has a plurality of facing portions 41 corresponding to the plurality of measurement regions R. Accordingly, for example, by simultaneously operating a plurality of pipette tips P, it is possible to simultaneously drop a sample solution S (for example, a sample solution S having a different component or component ratio for each measurement region R) to a plurality of measurement regions R. As a result, the efficiency of measurement work can be improved. For example, by forming a number (for example, 1536) of measurement regions R suitable for the HTS application in the sample support 1A, it is possible to use the sample support in the HTS application (that is, to use the sample support in an apparatus that performs HTS).

A hydrophilic coating layer C is provided on the inner surface of the through hole 41a. Accordingly, the sample solution S dropped from the tip Pa of the pipette tip P is easily transferred to the inner surface of the through hole 41a. As a result, the movement of the sample solution S to the first surface 2a side in the through hole 41a is promoted, and the sample solution S can be more smoothly moved to the first surface 2a.

In addition, in the ionization method (first step to fifth step) and the mass spectrometry method (first step to sixth step) using the sample support 1A, even if an operation of bringing the tip Pa of the pipette tip P close to the first surface 2a is performed to drop the sample solution S into the first surface 2a of the measurement region R in the third step in which the sample solution S is dropped, the tip Pa of the pipette tip P does not pass through the through hole 41a. That is, the narrow portion 41n of the through hole 41a reliably prevents the tip Pa of the pipette tip P from passing through the through hole 41a and contacting the first surface 2a of the measurement region R. Accordingly, it is possible to prevent the substrate 2 from being damaged due to the contact between the substrate 2 and the pipette tip P. Further, by removing the protective layer 4 before the fifth step in which the component S1 of the sample is ionized, the first surface 2a of the measurement region R can be appropriately irradiated with the laser light L in the fifth step. Therefore, according to the above ionization method, it is possible to prevent the substrate 2 from being damaged due to the contact between the substrate 2 and the pipette tip P, and to appropriately ionize the component S1 of the sample.

### [First Modification of Protective Layer 4]

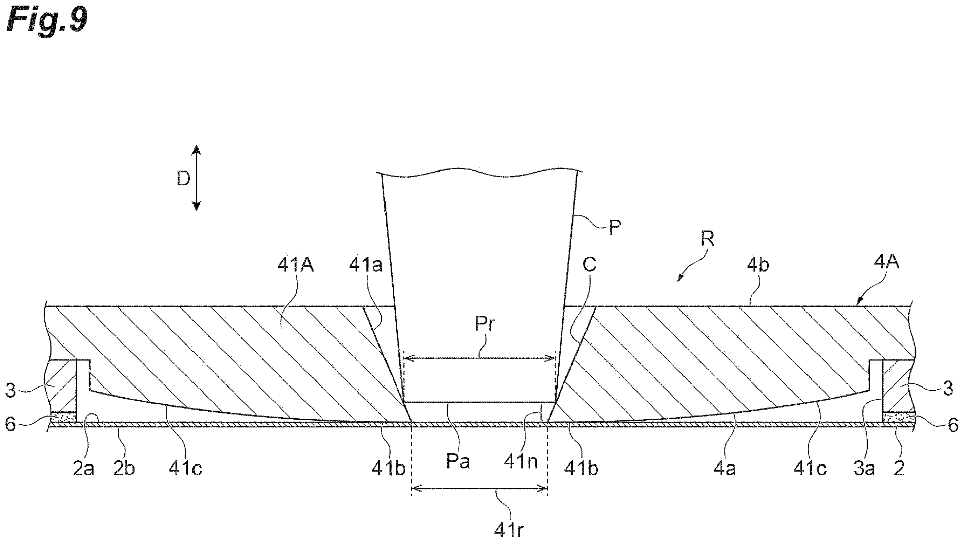

A first modification (protective layer 4A) of the protective layer 4 will be described with reference to FIG. 9. The protective layer 4A is different from the protective layer 4 in that a facing portion 41A is provided instead of the facing portion 41. The facing portion 41A differs from the facing portion 41 in the following respects. That is, in the facing portion 41A, the through hole 41a is formed in a tapered shape in which the inner diameter decreases toward the first surface 2a along the thickness direction D. For example, the through hole 41a is formed in a truncated cone shape whose diameter decreases from the outer surface 4b side toward the inner surface 4a side. In the facing portion 41A, the opening of the through hole 41a on the outer surface 4b side (the side opposite to the first surface 2a side) has a size including the tip Pa of the pipette tip P when viewed from the thickness direction D. That is, the opening diameter of the through hole 41a on the outer surface 4b side is larger than the outer diameter Pr of the tip Pa. The opening diameter of the through hole 41a on the outer surface 4b side in the facing portion 41A is, for example, about 0.5 mm to 5.0 mm. On the other hand, a narrow portion 41n (that is, a portion having a width smaller than the outer diameter Pr) is formed by a portion including an opening of the through hole 41a on the inner surface 4a side. The opening diameter of the through hole 41a on the inner surface 4a side is the minimum width (width 41r) in the narrow portion 41n.

According to the protective layer 4A, the tip Pa of the pipette tip P can be easily introduced into the through hole 41a. That is, since the opening diameter of the through hole 41a on the outer surface 4b side is larger than the outer diameter Pr of the tip Pa, even if the position of the tip Pa of the pipette tip P is slightly shifted in the direction orthogonal to the thickness direction D, the tip Pa of the pipette tip P can be guided into the through hole 41a. Further, according to the protective layer 4A, as compared with the protective layer 4, the tip Pa of the pipette tip P can be brought closer to the first surface 2a of the measurement region R. That is, in the protective layer 4, the tip Pa of the pipette tip P can be brought close to the first surface 2a only up to the position where the tip Pa abuts on the outer surface 4b, whereas in the protective layer 4A, the tip Pa of the pipette tip P can be brought close to the first surface 2a up to the upper end position of the narrow portion 41n (position below the outer surface 4b). This makes it possible to suitably drop the sample solution S into the measurement region R.

### [Second Modification of Protective Layer 4]

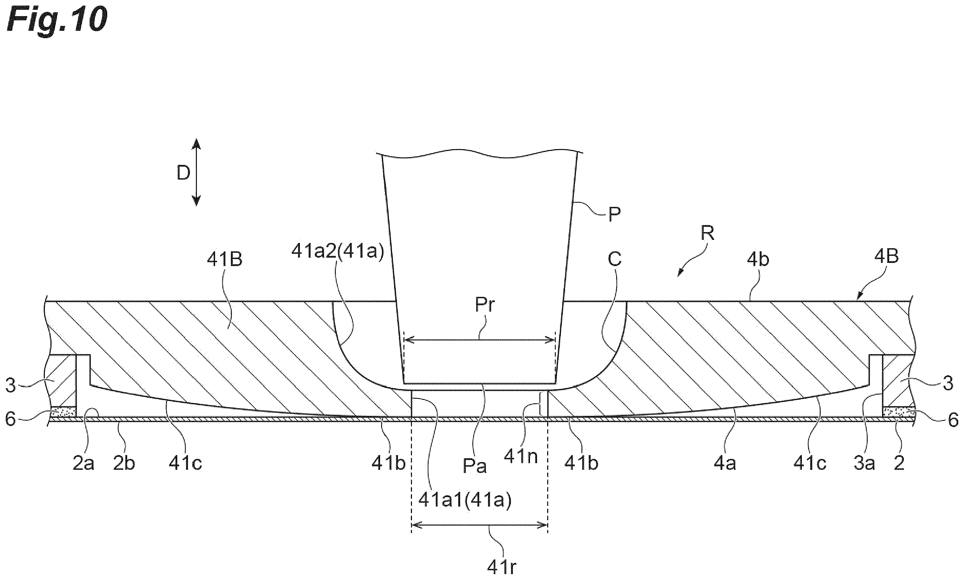

A second modification (protective layer 4B) of the protective layer 4 will be described with reference to FIG. 10. The protective layer 4B is different from the protective layer 4 in that a facing portion 41B is provided instead of the facing portion 41. The facing portion 41B differs from the facing portion 41 in the following respects. That is, in the facing portion 41B, the through hole 41a has a cylindrical portion 41a1 and a bowl-shaped portion 41a2. The cylindrical portion 41a1 is provided on the inner surface 4a side of the through hole 41a, and the bowl-shaped portion 41a2 is provided on the outer surface 4b side of the through hole 41a.

The cylindrical portion 41a1 is a portion having a width 41r smaller than the outer diameter Pr of the tip Pa of the pipette tip P. In the present embodiment, the cylindrical portion 41a1 is formed in a cylindrical shape, and the narrow portion 41n is constituted by the entire region of the cylindrical portion 41a1 in the thickness direction D.

The bowl-shaped portion 41a2 is connected to the end of the cylindrical portion 41a1 opposite to the first surface 2a. The bowl-shaped portion 41a2 is a portion in which the inner diameter increases in a bowl shape (curved surface shape) as it goes away from the first surface 2a along the thickness direction D. When viewed from the thickness direction D, the opening of the bowl-shaped portion 41a2 on the side opposite to the cylindrical portion 41a1 (that is, the opening of the through hole 41a on the outer surface 4b side) has a size including the tip Pa of the pipette tip P. That is, the opening diameter of the through hole 41a on the outer surface 4b side is larger than the outer diameter Pr of the tip Pa. The opening diameter of the through hole 41a on the outer surface 4b side in the facing portion 41B is, for example, about 0.5 mm to 5.0 mm.

According to the protective layer 4B, like the protective layer 4A, the tip Pa of the pipette tip P can be easily introduced into the through hole 41a. That is, even if the position of the tip Pa of the pipette tip P is slightly shifted in the direction orthogonal to the thickness direction D, the tip Pa of the pipette tip P can be introduced into the through hole 41a (specifically, into the bowl-shaped portion 41a2). Further, the tip Pa of the pipette tip P can be brought closer to the first surface 2a of the measurement region R. Specifically, in the protective layer 4B, the tip Pa of the pipette tip P can be brought close to the first surface 2a up to the upper end position of the cylindrical portion 41a1 (position below the outer surface 4b). This makes it possible to suitably drop the sample solution S into the measurement region R. Further, the through hole 41a (i.e., the cylindrical portion 41a1 and the bowl-shaped portion 41a2) can be formed by relatively easy processing such as etching.

### [Second Embodiment]

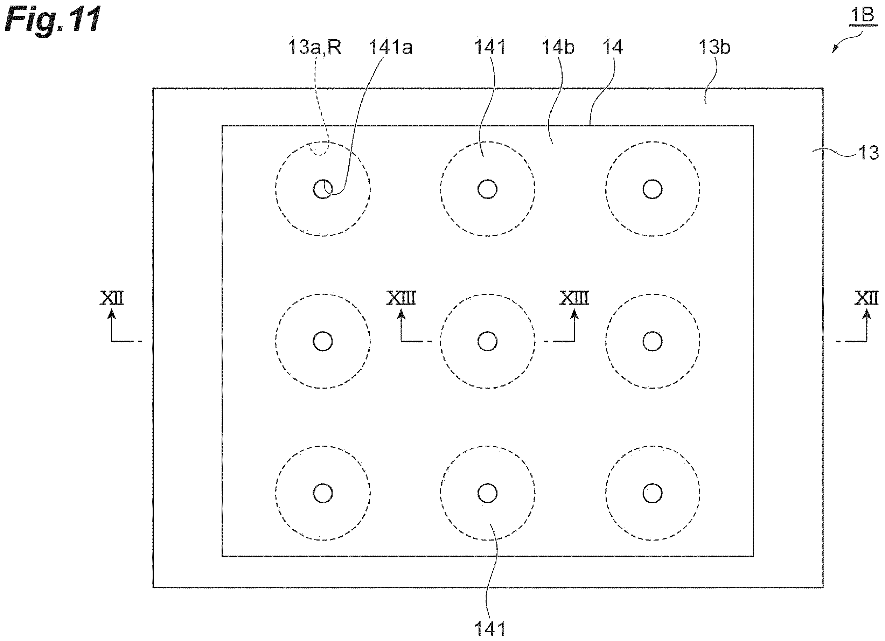

A sample support IB according to the second embodiment will be described with reference to FIGS. 11 to 13. Sample support IB is different from sample support 1A mainly in that it includes frame 13 instead of frame 3 and includes protective layer 14 instead of protective layer 4.

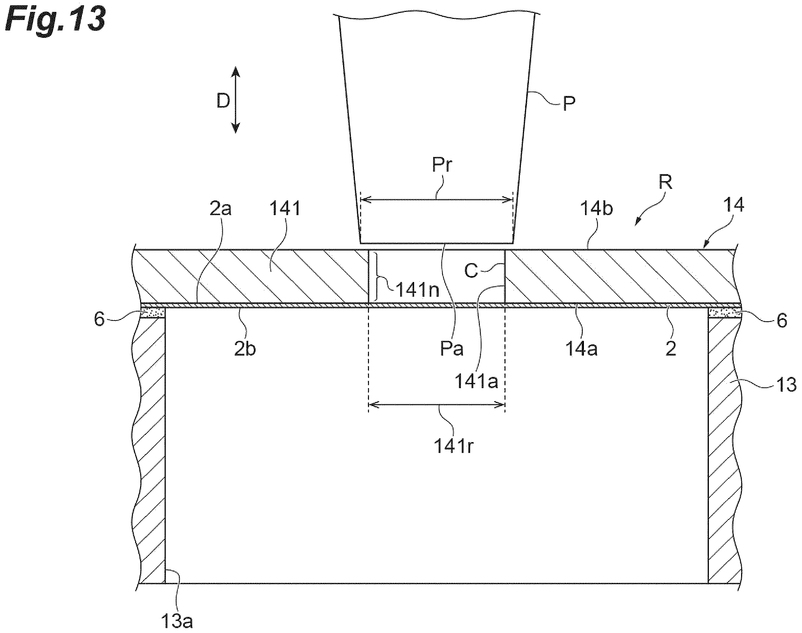

The frame 13 is joined to the second surface 2b of the substrate 2, and supports the substrate 2 on the second surface 2b side. As shown in FIG. 13, the frame 13 is fixed to the second surface 2b of the substrate 2 by adhesive layer 6. In the present embodiment, when viewed from the thickness direction D, the frame 13 is formed in a rectangular plate shape larger than the substrate 2. The frame 13 is formed with a plurality of opening parts 13a penetrating in a thickness direction of the frame 13 (i.e., a direction coinciding with the thickness direction D). As shown in FIG. 11, the plurality of opening parts 13a are arranged in a lattice pattern, for example. In the present embodiment, when viewed from the thickness direction D, nine opening parts 13a are arranged in 3 rows and 3 columns. A portion of the substrate 2 corresponding to the opening part 13a (that is, a portion overlapping the opening part 13a when viewed from the thickness direction D) functions as a measurement region R for performing sample ionization. That is, each measurement region R is defined by each opening part 13a provided in the frame 13. In other words, the frame 13 is formed so as to surround the measurement region R of the substrate 2 when viewed from the thickness direction D by having such an opening part 13a. As described above, in the sample support 1B, the substrate 2 is supported and the measurement region R is defined by the frame 13 bonded to the second surface 2b, not the first surface 2a, of the substrate 2.

Like the frame 3, the frame 13 is formed in a rectangular plate shape. The frame 13 is made of a magnetic material. For example, the frame 13 is formed of Kovar or an alloy such as 42 alloy. The length of one side of the frame 13 when viewed from the thickness direction D is, for example, about several cm to 200 cm, and the thickness of the frame 13 is, for example, 3 mm or less. In the present embodiment, as an example, the thickness of the frame 13 is 1 mm. The shape of the opening part 13a when viewed from the thickness direction D is, for example, circular, and the diameter of the opening part 13a in this case is, for example, about several mm to several 10 of mm. In the present embodiment, as an example, the diameter of the opening part 13a is 2 mm. The distance (pitch) between the centers of adjacent opening parts 13a is, for example, about several millimeters to several 10 of millimeters. According to the frame 13, handling of the sample support IB can be facilitated, and deformation of the substrate 2 due to a temperature change or the like is suppressed.

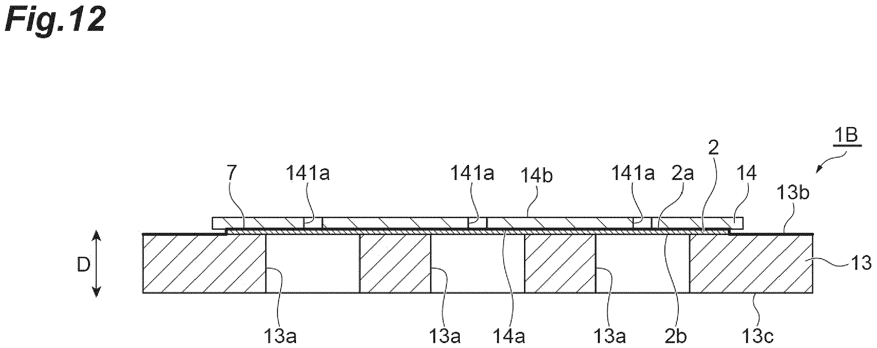

As shown in FIG. 12, in the sample support 1B, the conductive layer 7 is provided on the first surface 2a of the substrate 2, similarly to the sample support 1A. In FIG. 12, a portion where the conductive layer 7 is formed is indicated by a thick line. The conductive layer 7 is continuously (integrally) formed on the first surface 2a of the substrate 2. The conductive layer 7 is continuously formed from the edge of the first surface 2a of the substrate 2 to the surface13b of the frame 13 on the substrate 2 side when viewed from the thickness direction D. The conductive layer 7 included in the sample support IB is illustrated only in FIG. 12, and the conductive layer 7 included in the sample support IB is not illustrated in the other drawings.

The protective layer 14 is disposed to face the first surface 2a of the substrate 2. The protective layer 14 is formed of a magnetic material in a rectangular plate shape. The protective layer 14 is formed of, for example, the same magnetic material as the frame 13. The protective layer 14 has an inner surface 14a facing the first surface 2a of the substrate 2 and an outer surface 14b opposite to the inner surface 14a. The protective layer 14 has at least a facing portion 141 facing the measurement region R in the thickness direction D. In the present embodiment, when viewed from the thickness direction D, the protective layer 14 is integrally formed so as to include a plurality of (here, nine) measurement regions R (that is, regions in which the opening part 13a is formed). However, the protective layer 14 may be separated into a plurality of portions (for example, portions provided corresponding to the respective measurement regions R).

The protective layer 14 is disposed on the first surface 2a of the substrate 2 via the conductive layer 7. As described above, the frame 13 and the protective layer 14 are both formed of a magnetic material and are configured to attract each other by magnetic force. The substrate 2 is sandwiched between the frame 13 and the protective layer 14 that attract each other. That is, the protective layer 14 is fixed to the first surface 2a of the substrate 2 by the magnetic force between the protective layer 14 and the frame 13. As described above, in the sample support 1B, the protective layer 14 is not bonded to the first surface 2a of the substrate 2 with an adhesive or the like.

A through hole 141a (second through hole) is formed in each facing portion 141 of the protective layer 14. The length of the through hole 141a in the thickness direction D (that is, the thickness of the protective layer 14) is, for example, 0.1 mm to 5.0 mm. As shown in FIG. 13, the through hole 141a includes a narrow portion 141n having a width 141r (minimum width) smaller than the outer diameter Pr of the tip Pa of the pipette tip P. In the present embodiment, like the through hole 41a, the through hole 141a is formed in a tubular shape (cylindrical shape in the present embodiment) having a width 141r smaller than the outer diameter Pr. That is, in the present embodiment, the narrow portion 141n is formed by the entire through hole 141a in the thickness direction D. The width 141r of the narrow portion 141n is 500 µm or less. In order to ensure that the sample solution reaches the first surface 2a, the width 141r of the narrow portion 141n is preferably 50 µm or more. Like the inner surface of the through hole 41a, a hydrophilic coating layer C is provided on the inner surface of the through hole 141a.

### [Mass spectrometry method using sample support 1B]

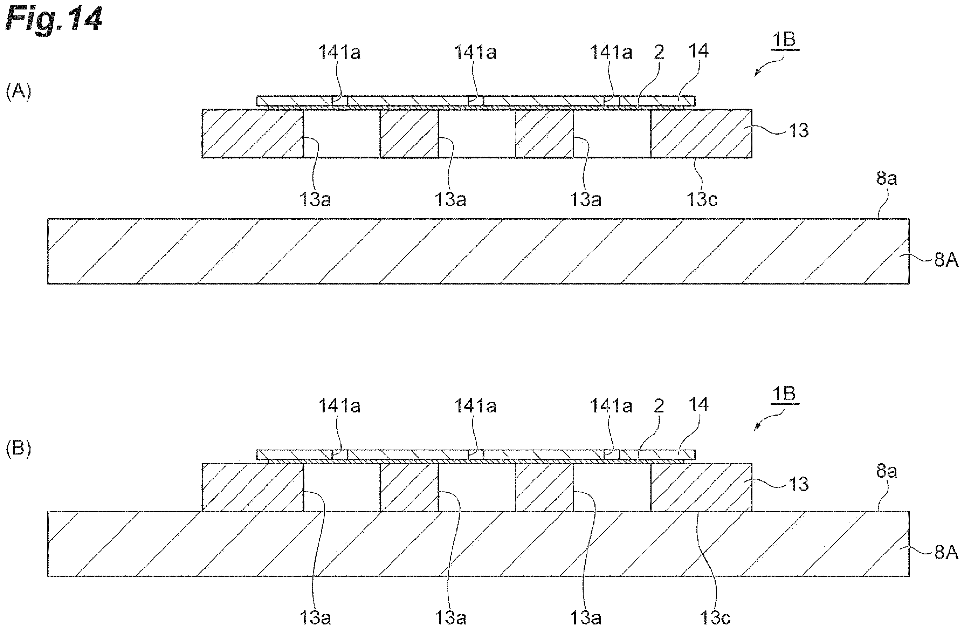

Next, a mass spectrometry method (including an ionization method) using the sample support 1B will be described with reference to FIGS. 14 to 16.

First, as shown in (A) of FIG. 14, the above-described sample support IB is prepared (first step). The sample support IB may be prepared by being manufactured by a person who performs the mass spectrometry method, or may be prepared by being acquired from a manufacturer, a seller, or the like of the sample support IB.

Subsequently, as shown in (B) of FIG. 14, the sample support IB is mounted on the mounting surface 8a such that the second surface 2b of the substrate 2 faces the mounting surface 8a of the mounting portion 8A having conductivity and magnetism (second step). Specifically, surface 13c of the frame 13 opposite to the substrate 2 is brought into contact with the mounting surface 8a. In the present embodiment, the frame 13 is fixed to the mounting surface 8a of the mounting portion 8A by the magnetic force acting between the frame 13 and the mounting portion 8A. Accordingly, the sample support IB is fixed to the mounting portion 8A. The mounting portion 8A is, for example, a dedicated plate or the like attached to a device that mechanically performs dropping the sample solution into the plurality of measurement regions R by the plurality of pipette tips P.

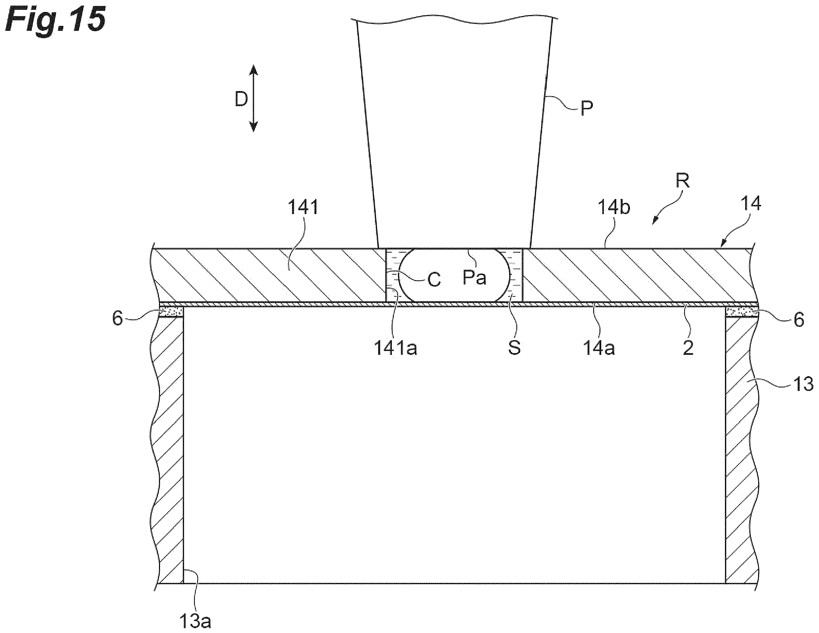

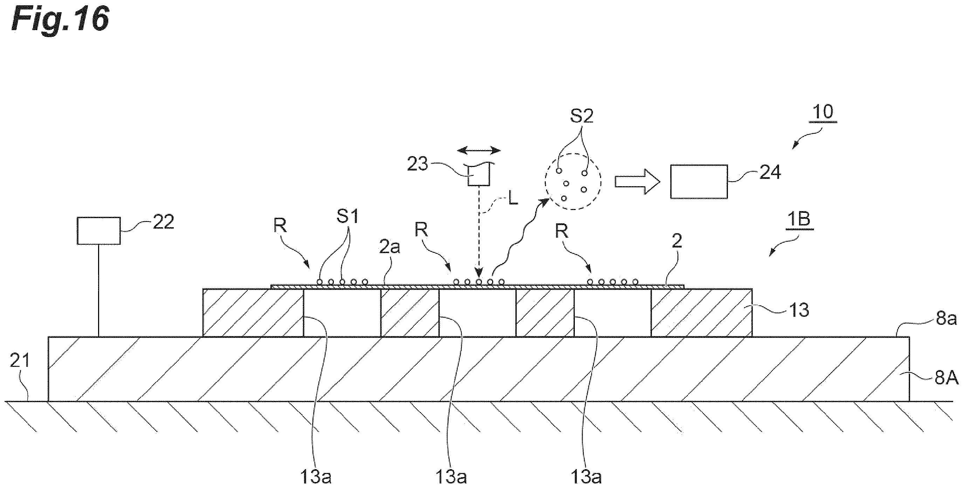

Subsequently, as shown in FIG. 15, in each measurement region R, the tip Pa of the pipette tip P is brought close to the through hole 141a from the outer surface 14b side (the side opposite to the first surface 2a side) of the protective layer 14. Specifically, the tip Pa of the pipette tip P is moved to a position where the tip Pa and the through hole 141a overlap each other when viewed from the thickness direction D and the tip Pa abuts on the outer surface 14b. Then, the sample solution S is dropped from the tip Pa of the pipette tip P into the measurement region R through the through hole 141a (third step). Thus, the sample solution S is introduced into the first surface 2a of the substrate 2 along the inner surface of the through hole 141a. Although a part of the sample solution S introduced into the first surface 2a penetrates into the through hole 2c and moves to the second surface 2b side, at least a part of the sample solution S remains on the first surface 2a side because the through hole 2c is a fine hole. When the sample solution S is dried, the component S1 of the sample remains on the first surface 2a side (see FIG. 16).

Subsequently, as shown in FIG. 16, after the sample solution S is dropped into each measurement region R, the protective layer 14 is removed from the sample support IB (fourth step).

Subsequently, as shown in FIG. 16, the mounting portion 8A and the sample support IB are mounted on the support unit 21 (for example, stage) of the mass spectrometer 20 in a state in which the sample support IB in which the component S1 of the sample is retained on the first surface 2a side is fixed to the mounting portion 8A. Subsequently, the voltage application unit 22 applies a voltage to the conductive layer 7 (see FIG. 12) of the sample support 1B through the mounting surface 8a of the mounting portion 8A and the frame 13. Subsequently, the first surface 2a of each measurement region R is irradiated with laser light L (energy beam) by the laser light irradiation unit 23 (fifth step). In the present embodiment, the laser light irradiation unit 23 scans each measurement region R with the laser light L. The scanning of the laser light L for each measurement region R can be performed by operating at least one of the support unit 21 and the laser light irradiation unit 23.

In this manner, by irradiating the first surface 2a of the substrate 2 with the laser light L while applying a voltage to the conductive layer 7, the component S1 of the sample remaining in the through hole 2c (particularly, on the first surface 2a side) of the substrate 2 is ionized, and the sample ion S2 (ionized component SI) is discharged (fifth step). Specifically, the energy is transferred from the conductive layer 7 (see FIG. 12) that has absorbed the energy of the laser light L to the component S1 of the sample remaining in the through hole 2c, and the component S1 of the sample that has acquired the energy is vaporized and acquires an electric charge to become the sample ion S2. The first step to the fifth step described above correspond to an ionization method (laser desorption ionization method in the present embodiment) using the sample support IB.

The released sample ion S2 moves while accelerating toward a ground electrode (not shown) provided between the sample support IB and the ion detection unit 24 of the mass spectrometer 20. That is, the sample ion S2 moves toward the ground electrode while being accelerated by the potential difference generated between the conductive layer 7 to which the voltage is applied and the ground electrode. Then, the sample ion S2 is detected by the ion detection unit 24 (sixth step). In the present embodiment, the mass spectrometer 20 is a scanning mass spectrometer using time-of-flight mass spectrometry (TOF-MS). The first step to the sixth step described above correspond to the mass spectrometry method using the sample support IB.

In the ionization method described above, as in the case of using the sample support 1A, a step of performing surface treatment (for example, excimer irradiation or plasma irradiation) for improving hydrophilicity on the inner surface of the through hole 141a may be further performed before the third step (that is, before dropping the sample solution S).

### [Effects of Second Embodiment]

As described above, according to the sample support 1B, the same effects as those of the sample support 1A described above are exhibited. That is, in the sample support 1B, the protective layer 14 having the facing portion 141 facing the measurement region R is disposed so as to face the first surface 2a of the substrate 2. The facing portion 141 is formed with a through hole 141a including a narrow portion 141n having a width 141r smaller than the outer diameter Pr of the tip Pa of the pipette tip P. Therefore, even if an operation of bringing the tip Pa of the pipette tip P close to the first surface 2a is performed in order to drop the sample solution S into the first surface 2a of the measurement region R, the tip Pa of the pipette tip P does not pass through the through hole 141a. That is, the narrow portion 141n of the through hole 141a reliably prevents the tip Pa of the pipette tip P from penetrating the through hole 141a and contacting the first surface 2a of the measurement region R. Therefore, according to the sample support 1B, it is possible to prevent the substrate 2 from being damaged due to the contact between the substrate 2 and the pipette tip P.

Further, in the sample support 1B, the frame 13 is bonded to the second surface 2b of the substrate 2 and is formed of a magnetic material. Accordingly, when the sample support IB is fixed in order to drop the sample solution S into the sample support IB as in the above embodiment, the magnetic mounting portion 8A is used, and thus the frame 13 may be appropriately fixed to the mounting portion 8A by the magnetic force acting between the frame 13 and the mounting portion 8A. Accordingly, a fixing member such as a tape for fixing the sample support 1B to the mounting portion 8A may be omitted.

The protective layer 14 is formed of a magnetic material. The protective layer 14 is fixed to the first surface 2a of the substrate 2 by the magnetic force between the protective layer 14 and the frame 13. Accordingly, an adhesive or the like for fixing the protective layer 14 to the substrate 2 can be eliminated. Therefore, when the protective layer 14 is removed from the first surface 2a of the substrate 2, it is possible to prevent the first surface 2a of the substrate 2 from being pulled and the substrate 2 from being damaged.

### [First Modification of Protective Layer 14]

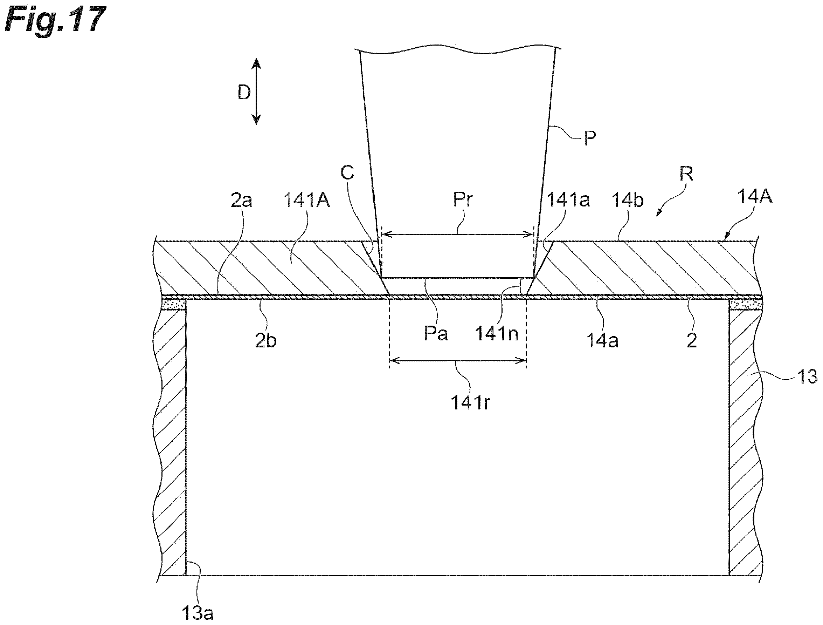

A first modification (protective layer 14A) of the protective layer 14 will be described with reference to FIG. 17. The protective layer 14A has a configuration corresponding to that of the protective layer 4A. In particular, the protective layer 14A differs from the protective layer 14 in that it includes a facing portion 141A instead of the facing portion 141. The facing portion 141A differs from the facing portion 141 in the following respects. That is, in the facing portion 141A, the through hole 141a is formed in a tapered shape in which the inner diameter decreases toward the first surface 2a along the thickness direction D. For example, the through hole 141a is formed in a truncated cone shape whose diameter decreases from the outer surface 14b side toward the inner surface 14a side. In the facing portion 141A, the opening of the through hole 141a on the outer surface 14b side (the side opposite to the first surface 2a side) has a size including the tip Pa of the pipette tip P when viewed from the thickness direction D. That is, the opening diameter of the through hole 141a on the outer surface 14b side is larger than the outer diameter Pr of the tip Pa. On the other hand, a narrow portion 141n (that is, a portion having a width smaller than the outer diameter Pr) is formed by a portion including an opening of the through hole 141a on the inner surface 14a side. The opening diameter of the through hole 141a on the inner surface 14a side is the minimum width (width 141r) in the narrow portion 141n. According to the protective layer 14A including such a facing portion 141A, the same effects as those of the above-described protective layer 4A are exhibited.

### [Second Modification of Protective Layer 14]

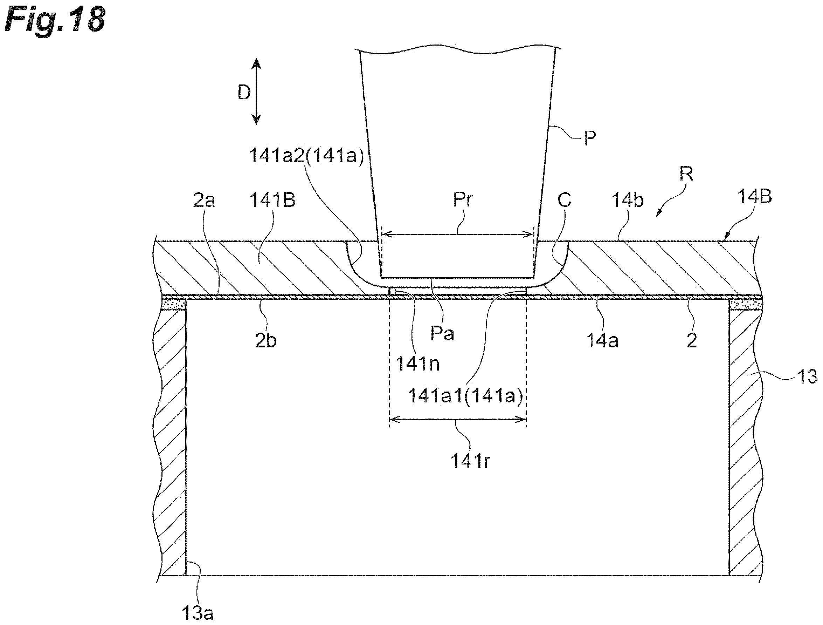

A second modification (protective layer 14B) of the protective layer 14 will be described with reference to FIG. 18. The protective layer 14B has a configuration corresponding to that of the protective layer 4B. In particular, the protective layer 14B differs from the protective layer 14 in that it includes a facing portion 141B instead of the facing portion 141. The facing portion 141B differs from the facing portion 141 in the following respects. That is, in the facing portion 141B, the through hole 141a has a cylindrical portion 141a1 and a bowl-shaped portion 141a2. The cylindrical portion 141a1 is provided on the inner surface 14a side of the through hole 141a, and the bowl-shaped portion 141a2 is provided on the outer surface 14b side of the through hole 141a.

The cylindrical portion 141a1 has a width 141r smaller than the outer diameter Pr of the tip Pa of the pipette tip P. In the present embodiment, the cylindrical portion 141a1 is formed in a cylindrical shape, and the narrow portion 141n is constituted by the entire region of the cylindrical portion 141a1 in the thickness direction D. The bowl-shaped portion 141a2 is connected to an end of the cylindrical portion 141a1 opposite to the first surface 2a. The bowl-shaped portion 141a2 is a portion in which the inner diameter increases in a bowl shape (curved surface shape) as it goes away from the first surface 2a along the thickness direction D. When viewed from the thickness direction D, the opening of the bowl-shaped portion 141a2 opposite to the cylindrical portion 141a1 (that is, the opening of the through hole 141a on the outer surface 14b side) has a size including the tip Pa of the pipette tip P. That is, the opening diameter of the through hole 141a on the outer surface 14b side is larger than the outer diameter Pr of the tip Pa. According to the protective layer 14B including such a facing portion 141B, the same effects as those of the above-described protective layer 4B are exhibited.

Although an embodiment of the present disclosure has been described above, the present disclosure is not limited to the above-described embodiment. For example, the material and shape of each component are not limited to those described above, and various materials and shapes can be adopted.

For example, in the above embodiment, a plurality of (nine as an example) measurement regions R are defined by the plurality of opening parts 3a and 13a provided in the frame 3, 13, but only one measurement region R may be provided.

The conductive layer 7 provided on the substrate 2 may be provided at least on the first surface 2a. Therefore, the conductive layer 7 may be provided on, for example, the second surface 2b in addition to the first surface 2a, or may be provided on the whole or a part of the inner surface of each through hole 2c.

The substrate 2 may have conductivity. For example, the substrate 2 may be formed of a conductive material such as a semiconductor. In this case, the conductive layer 7 for applying a voltage to the first surface 2a side of the substrate 2 may be omitted. However, even when substrate 2 has conductivity, the conductive layer 7 may be provided to suitably apply a voltage to the first surface 2a side of substrate 2.

When the conductive layer 7 is omitted in the sample support 1A, the facing portion 41 may be directly adhered to the first surface 2a of the substrate 2. Specifically, the adhesive portion 41b of the facing portion 41 may be directly adhered to the first surface 2a.

Although the sample support 1A includes the tape 5 for fixing the sample support 1A to the glass slide 8, the sample support 1A may not include the tape 5. In this case, the opening part 3c of the frame 3 may also be omitted. In this case, in the second step of the mass spectrometry method using the sample support 1A described above, the sample support 1A may be fixed to the glass slide 8 by a tape prepared separately from the sample support 1A or a means other than the tape (for example, a means using an adhesive, a fixing tool, or the like).

In addition, in the above-described embodiment, the hydrophilic coating layer C is provided on the inner surface of the through holes 41a and 141a of the facing portion. However, when the sample solution S can be sufficiently guided to the first surface 2a without the coating layer C, the coating layer C may be omitted.

In the fifth step of the mass spectrometry method using the sample support 1A or the sample support 1B, the object to which the voltage is applied by voltage application unit 22 is not limited to the mounting surface 8a. For example, the voltage may be applied directly to the frame 3, 13 or the conductive layer 7. In this case, the glass slide 8 (or the mounting portion 8A) and the tape 5 may not have conductivity.

In the fifth step of the mass spectrometry method using the sample support 1A or the sample support 1B, the laser light irradiation unit 23 may irradiate the measurement region R with the laser light L at once. That is, the mass spectrometer 20 may be a projection mass spectrometer. The ionization method described above can also be used for other measurements and experiments such as ion mobility measurement.

Further, the use of the sample supports 1A and 1B is not limited to the ionization of the sample by the irradiation of the laser light L. The sample supports 1A and 1B can be used for sample ionization by irradiation with energy beams such as laser light, ion beams, and electronic beams. In the above-described ionization method and mass spectrometry method, the sample can be ionized by irradiation with an energy beam.

### Reference Signs List

- 1A, 1B: sample support
- 2: substrate
- 2a: first surface
- 2b: second surface
- 2c: through hole (first through hole)
- 3,: 13 frame
- 4, 4A, 4B, 14, 14A, 14B: protective layer
- 7: conductive layer
- 8: glass slide (mounting portion)
- 8A: mounting portion
- 8a: mounting surface
- 41, 41A, 41B, 141, 141A, 141B: facing portion
- 41a,: 141a through hole (second through hole)
- 41a1, 141a1: cylindrical portion
- 41a2, 141a2: bowl-shaped portion
- 41b: adhesive portion
- 41c: spaced portion
- 41n, 141n: narrow portion
- 41r, 141r: width
- C: coating layer
- D: thickness direction
- P: pipette tip
- Pa: tip
- Pr: outer diameter,
- R: measurement region
- S: sample solution
- S1: component.

## Claims

1. A sample support for sample ionization, comprising:
a substrate having a first surface and a second surface opposite to the first surface, the substrate having a plurality of first through holes opened in the first surface and the second surface;
a frame formed to surround a measurement region of the substrate for ionizing a component of the sample when viewed from a thickness direction of the substrate and configured to support the substrate; and
a protective layer disposed to face the first surface and having a facing portion facing the measurement region,
wherein a second through hole penetrating in the thickness direction is formed in the facing portion, and
the second through hole includes a narrow portion having a width smaller than an outer diameter of a tip of a pipette tip for dropping a sample solution including the sample into the measurement region.

2. The sample support according to claim 1, wherein the second through hole is formed in a cylindrical shape having a width smaller than the outer diameter.

3. The sample support according to claim 1, wherein the second through hole is formed in a tapered shape in which an inner diameter decreases toward the first surface along the thickness direction, and
when viewed from the thickness direction, an opening of the second through hole opposite to the first surface side has a size including the tip of the pipette tip.

4. The sample support according to claim 1, wherein the second through hole includes:
a cylindrical portion including the narrow portion; and
a bowl-shaped portion connected to an end portion of the cylindrical portion opposite to the first surface side and having an inner diameter increasing with distance from the first surface along the thickness direction,
when viewed from the thickness direction, an opening of the bowl-shaped portion opposite to the cylindrical portion has a size including the tip of the pipette tip.

5. The sample support according to any one of claims 1 to 4, wherein the facing portion is adhered directly or indirectly to the first surface so as to be releasable from the first surface.

6. The sample support according to claim 5, wherein the facing portion comprises:
an adhesive portion directly or indirectly adhered to the first surface at a peripheral portion of an opening of the second through hole on the first surface side; and
a spaced portion located outside the adhesive portion when viewed from the thickness direction and spaced apart from the first surface.

7. The sample support according to any one of claims 1 to 4, wherein the frame is bonded to the first surface of the substrate, and
the protective layer is provided to cover the frame and the measurement region.

8. The sample support according to any one of claims 1 to 4, wherein the frame is bonded to the second surface of the substrate and is formed of a magnetic material.

9. The sample support according to claim 8, wherein the protective layer is formed of a magnetic material, and
the protective layer is fixed to the first surface of the substrate by a magnetic force between the protective layer and the frame.

10. The sample support according to any one of claims 1 to 9, further comprising a conductive layer provided on the first surface so as not to block the first through hole.

11. The sample support according to any one of claims 1 to 10, wherein a width of the first through hole is 1 nm to 700 nm, and a width of the narrow portion of the second through hole is 500 µm or less.

12. The sample support according to any one of claims 1 to 11, wherein a plurality of measurement regions are formed in the substrate, and
the protective layer has a plurality of facing portions corresponding to the plurality of measurement regions.

13. The sample support according to any one of claims 1 to 12, wherein a hydrophilic coating layer is provided on the inner surface of the second through hole.

14. An ionization method including:
a first step of preparing the sample support according to any one of claims 1 to 13;
a second step of placing the sample support on a mounting surface of a mounting portion such that the second surface faces the mounting surface;
a third step of bringing a tip of the pipette tip close to the second through hole from a side opposite to the first surface side of the protective layer and then dropping the sample solution from the tip of the pipette tip into the measurement region through the second through hole.
a fourth step of removing the protective layer from the sample support after the sample solution is dropped; and
a fifth step of ionizing a component of the sample by irradiating the first surface of the measurement region with an energy beam after the sample solution dropped on the substrate is dried.

15. The ionization method according to claim 14, further including a step of performing a surface treatment for improving hydrophilicity on the inner surface of the second through hole before the third step.

16. A mass spectrometry method including:
each step of the ionization method according to claim 14 or 15; and
a sixth step of detecting the component ionized in the fifth step.
